# EUROPÄISCHE PATENTSCHRIFT

(11) **EP 1 027 146 B1**
(45) Veröffentlichungstag und Bekanntmachung des Hinweises auf die Patenterteilung: **12.03.2003**
(21) Anmeldenummer: 98954284.0
(22) Anmeldetag: 26.09.1998
(51) Int. Cl.: B01J 8/24, C08F 10/00

(54) **GASPHASENPOLYMERISATION IN EINEM KELCHREAKTOR**
GAS PHASE POLYMERISATION IN A BELL-SHAPED REACTOR
POLYMERISATION EN PHASE GAZEUSE DANS UN REACTEUR CUPULIFORME

(30) Priorität: 10.10.1997 DE 19744710
(43) Veröffentlichungstag der Anmeldung: 16.08.2000
(73) Patentinhaber: BAYER AG, 51368 Leverkusen (DE)
(72) Erfinder: HAENDELER, Friedrich, Mt. Pleasant, SC 29464 (US); HEROLD, Heiko, D-41470 Neuss (DE); MLECZKO, Leslaw, D-44801 Bochum (DE); RIEHLE, Claus, D-51519 Odenthal (DE); MERSMANN, Franz-Josef, D-51427 Bergisch Gladbach (DE); SCHNEIDER, Jürgen, D-50668 Köln (DE); DAUBEN, Michael, D-41468 Neuss (DE)
(86) Internationale Anmeldenummer: EP9806125
(87) Internationale Veröffentlichungsnummer: WO99019059

(56) Entgegenhaltungen:
- EP-A- 0 059 080
- EP-A- 0 855 411
- US-A- 4 469 855
- US-A- 4 994 534
- US-A- 5 416 175
- US-A- 5 461 123
- PATENT ABSTRACTS OF JAPAN vol. 006, no. 257 (C-140), 16. Dezember 1982 & JP 57 149305 A (MITSUI SEKIYU KAGAKU KOGYO KK), 14. September 1982

## Beschreibung

Die Erfindung betrifft einen Wirbelbettreaktor zur Herstellung von insbesondere Kautschuk in der Gasphase, dessen Wandung im unteren Teil als ein Zylinder und daran anschließend als sich kontinuierlich öffnender Konus geformt ist, wobei der Winkel des Konus bezogen auf die Mittelachse 2-10° beträgt und das Wirbelbett höher als der zylindrische Teil ist.

Die Polymerisation von Polyolefinen in der Gasphase ist ein seit langem bekanntes Verfahren, das bereits 1968 zum ersten Mal großtechnisch realisiert wurde (Ullmanns Encyklopädie der technischen Chemie, 4. Auflage 1980, Bd. 19, S. 186 ff).

EP-A2-0 059 080 offenbart ausschließlich einen Reaktor in Kombination mit einem wandgängigen Rührer. Durch die vorliegende Erfindung wird dem Fachmann die neue Lehre offenbart, dass durch die spezielle in dieser Erfindung vorliegende Reaktorgeometrie gänzlich auf einen Rührer verzichtet werden kann.

Patent Abstracts of Japan, vol. 006, no. 257 (C-140), 16.Dez.1982, & JP-57 149305 A, **14**.Sept.1982 offenbart einen Öffnungswinkel im Bereich von 0-15°. Wie in den Beispielen der vorliegenden Anmeldung demonstriert, führt jedoch ein Öffnungswinkel von 12° zu Wandanlagerungen.

Die ältere Anmeldung EP-A1-0 855 411 offenbart einen Öffnungswinkel des Reaktors im Bereich von 5-30° und liegt ausserhalb des in der vorliegenden Erfindung beanspruchten Bereiches von 3,5-4.5°.

Die eigentliche Polymerisationsreaktion findet bei diesem Verfahren in einem Wirbelbettreaktor statt, der aus einer Reaktions- und einer darüberliegenden Beruhigungszone, in der die Feststoffpartikel weitgehend von der Gasphase getrennt werden, besteht. Die Monomeren, der Katalysator und mögliche Zusatzstoffe wie z.B. Additive oder Füllstoffe werden in die Reaktionszone eingeleitet. Zur Aufrechterhaltung eines Wirbelbetts wird dem Reaktor, von unten, ein Kreisgasstrom zugeführt. Dieser Kreisgasstrom, der im wesentlichen aus den nicht umgesetzten Monomeren besteht, wird am Kopf des Reaktors wieder abgezogen, von Restpartikeln befreit, gekühlt und in den Reaktor zurückgeführt. Das entstehende Polymerisat wird aus der Reaktionszone kontinuierlich oder semi-kontinuierlich abgezogen und weiterbehandelt.

Bei der Gestaltung von Apparaten, die für das Gasphasenpolymerisationsverfahren eingesetzt werden sollen, muß vor allem klebrigen Reaktionsprodukten besondere Aufmerksamkeit gewidmet werden, um Verklebungen oder Anbackungen an der Reaktorwandung bzw. an sonstigen Teilen des Reaktors (Reaktorfouling) sowie Produktagglomerationen zu vermeiden.

Dies gilt insbesondere für den Wirbelbettreaktor. Dementsprechend befassen sich viele Veröffentlichungen mit dessen Gestaltung.

Aus der US-PS 4 003 712 z.B. ist ein vertikaler Wirbelbettreaktor bekannt, der einen zylindrischen unteren Teil aufweist, an den sich ein kurzer konischer Abschnitt und wieder ein Zylinder mit einem größeren Querschnitt als der untere Teil anschließt. In dem unteren Teil findet die eigentliche Polymerisationsreaktion statt, während in dem oberen Teil, der Beruhigungszone, die Polymerpartikel von dem Gasstrom getrennt werden.

Auf dieser Reaktorgeometrie basiert noch eine Vielzahl von weiteren Veröffentlichungen. Beispielhaft seien hier nur die WO 96/04322, die EP-A-0 301 872, das EP-B-0 475 603 und die EP-A-0 728 771 genannt. Der oben genannte Reaktor hat den Nachteil, daß im Übergangsbereich zwischen dem unteren und dem oberen Teil Polymerpartikel anbacken und somit den Reaktorquerschnitt kontinuierlich verengen, bis der Reaktor abgeschaltet und gereinigt werden muß.Allen Verfahren ist gemein, daß sich das Wirbelbett immer im zylindrischen Teil des Reaktors befindet und daß scharfe Kanten zwischen zylindrischem Teil und konischem Reaktorabschnitt auftreten. Aus EP-A-0 765 886 ist ein Apparat zur Entgasung von Olefinpolymeren bekannt, dessen Wandungen in einem Winkel von 0,5-15° gemessen zur Mittelachse verlaufen.

Um das sogenannte Reaktorfouling zu vermeiden, wird in der US-PS-5 428 118 vorgeschlagen, die Wände der Beruhigungszone mit einem tangentialen Luftstrom zu überstreichen, so daß Ablagerungen vermieden oder abgelagerte Partikel wieder aufgewirbelt werden. Auch mit dieser Lehre kann die Standzeit des Wirbelbettreaktors bei Kautschuken nur unwesentlich verlängert werden.

In der Veröffentlichung "New Reactor in Jet Spouted Bed Regime For Catalytic Polymerization" Chem. Eng. Sci. Vol. 49, Page 4579-4588, ist ferner ein Strahlschichtreaktor zur Gasphasenpolymerisation beschrieben, der sich unmittelbar über dem Gaseintritt konisch mit einem Winkel von 10 bis ca. 23° erweitert. Dieser Reaktor soll sich zur Handhabung klebriger Polymerpartikel eignen, wobei die Autoren nicht von einem Wirbelschicht- sondern von einem Strahlschicht-Verfahren mit Pfropfenströmung ausgehen. Dieses Verfahren ist großtechnisch nicht erprobt.

Es stellt sich deshalb die Aufgabe einen Wirbelbettreaktor zur Verfügung zu stellen, der die Nachteile des Standes der Technik nicht aufweist.

Die Aufgabe wird erfindungsgemäß durch die Bereitstellung eines Wirbelbettreaktors mit einem kreisrunden Querschnitt zur Herstellung von klebrigen Polymerisaten in der Gasphase dadurch gelöst, dass die Wandung (1) des Wirbelbettreaktors im unteren Teil als Zylinder (2) und daran anschließend als sich kontinuierlich öffnender Konus (3) geformt ist, und wobei der Winkel des Konus (3), bezogen auf die Mittelachse im Bereich von 3,5-5,5° beträgt, mit der Massgabe dass Reaktoren bei denen der Winkel des Konus (3), bezogen auf die Mittelachse 5-5,5° beträgt ausgenommen sind.

Das Wirbelbett in dem erfindungsgemäßen Reaktor dehnt sich mindestens über die gesamte Länge des zylindrischen Teils aus. Besonders bevorzugt erstreckt sich das Wirbelbett auch noch in den Konus, wobei die Gesamthöhe des Wirbelbetts bevorzugt 150%, besonders bevorzugt 130% der Länge des zylindrischen Teils nicht überschreiten sollte.

Das Volumen des zylindrischen Teils bestimmt sich nach der mittleren Verweilzeit der Polymerpartikel in dem Wirbelbett, wobei die Höhe des zylindrischen Teils so bemessen wird, daß eine aufsteigende, sich ständig vergrößernde Blase maximal 80 % des Querschnitts des zylindrischen Teils ausfüllt. Aus dem Volumen und der Höhe des zylindrischen Teils errechnet sich dessen Durchmesser.

Die Gasleerrohrgeschwindigkeit in dem zylindrischen Teil muß mindestens der Lockerungsgeschwindigkeit der Polymerpartikel entsprechen. Vorzugsweise beträgt die Gasleerrohrgeschwindigkeit jedoch mindestens das 3-fache, besonders bevorzugt das 5 bis 7fache der Lockerungsgeschwindigkeit. Vorzugsweise sollte die Gasleerrohrgeschwindigkeit 0,3-2 m/s, besonders bevorzugt 0,4-1 m/s, ganz besonders bevorzugt 0,5-0,8 m/s betragen.

Vorzugsweise beträgt der Winkel des Konus, bezogen auf die Mittelachse, 2 bis 10°, besonders bevorzugt 3 bis 6° und ganz besonders bevorzugt 3,5 bis 5,5°.

Die Länge des Konus wird so bemessen, daß der Reaktorquerschnitt am Ende des Konus so groß und damit die Gasleerrohrgeschwindigkeit so gering ist, daß 10 bis 1500 um, vorzugsweise 50 bis 300 µm, besonders bevorzugt 50 bis 150 µm große Katalysator- oder Polymerpartikel nicht mehr aus dem Reaktor ausgetragen werden. Durch diese Maßnahme wird ein Feststoffaustrag aus dem erfindungsgemäßen Reaktor vermindert und die Verklebung der nachgeschalteten Apparate reduziert.

Das Verhältnis von Durchmesser des Zylinders zur Reaktorhöhe beträgt vorzugsweise 1:8-15, besonders bevorzugt 1:11-12.

Das Höhenverhältnis von dem Zylinder zu dem Konus beträgt vorzugsweise 1:1,5-4, besonders bevorzugt 1:2-2,5.

In einer weiteren bevorzugten Ausführungsform beträgt das Höhenverhältnis von dem Zylinder zu dem Konus 1:80-100, so daß nahezu der gesamte Mantel des Reaktors als sich kontinuierlich öffnender Konus geformt ist.

Vorzugsweise wird der Reaktor am Kopf von einer Halbkugel abgeschlossen. Die Halbkugel kann Einbauten aufweisen. Vorzugsweise wird die Kugel mit einem tangentialen Luftstrom beaufschlagt, so daß die Halbkugel als in den Reaktor eingebauter Zyklon funktioniert. Der Boden des Reaktors kann eine beliebige Form aufweisen, wobei die Form einer Halbkugel bevorzugt wird.

Das zu polymerisierende Gasgemisch wird vorzugsweise am unteren Ende in den Reaktor durch ein gelochten Gasverteiler eingeleitet. Der Gasverteiler muß so ausgelegt sein, daß in der Wirbelschicht eine gute Feststoffvermischung herrscht und die Wände des zylindrischen Teils kontinuierlich von Gas überströmt werden, um dort Ablagerungen von Polymerpartikeln zu vermeiden. Bevorzugt wird ein Lochboden verwendet.

Auch die Wände des Konus können, falls erforderlich mit einem tangentialen Gasstrom beaufschlagt werden, damit sich keine Polymerablagerungen bilden.

Der Reaktor wird vorzugsweise bei einer Temperatur von 20-160°C und einem Druck von 1-20 bar absolut betrieben. Im erfindungsgemäßen Verfahren kann die Temperatur auch so gewählt werden, daß sie unterhalb des Taupunkts zumindest eines Bestandteiles des Kreisgases liegt.

Der Reaktor wird vorzugsweise aus rostfreiem oder schwarzem Stahl gefertigt.

Der erfindungsgemäße Wirbelbettreaktor eignet sich zur Herstellung von Polymeren jeglicher Art, besonders bevorzugt zur Herstellung von Kautschuken jeglicher Art in der Gasphase.

Polymere im Sinne der Erfindung sind z.B. Poly-α-Olefine, Polyisopren, Polystyrol, SBR, IIR, Polyisobuten, Polychloropren, Silikone und Copolymere aus Ethylen und einem oder mehrerer der folgenden Verbindungen: Acrylnitril, Malonsäureester, Vinylacetat, Acryl- und Methacrylsäurester, Vinylacetat, Acryl- und Methacrylsäureester, α-Olefine, Diene und Triene.

Kautschuke im Sinne der Erfindung sind unvernetzte, aber vernetzbare Polymere, die durch die Vernetzung in den gummielastischen Zustand überführt werden können.

Vorzugsweise wird der erfindungsgemäße Wirbelschichtreaktor jedoch zur Herstellung von EPM, EPDM, SBR, NBR, Polyisopren und BR in der Gasphase eingesetzt.

Die Polymerisate können die üblichen Additive enthalten. Im erfindungsgemäßen Verfahren könnendie Polymerisate auch in Gegenwart von inerten Füllstoffen hergestellt werden. Bevorzugte Füllstoffe sind Ruß, Silica, Ton, Talkum und/oder gemahlenes Polyolefin.

Die in der Gasphase hergestellten Kautschuke eignen sich zur Herstellung von Formkörpern jeglicher Art. Vorzugsweise werden die Kautschuke jedoch zur Herstellung von Autoreifen verwendet

Ebenfalls bevorzugt werden die in dem erfindungsgemäßen Wirbelbettreaktor hergestellten Kautschuke in Mischung mit anderen Kunststoffen zu deren Modifikation verwendet.

Es muß als völlig überraschend und für den Fachmann unerwartet angesehen werden, daß sich mit dem erfindungsgemäßen Reaktor die Standzeiten im Vergleich zu Reaktoren des Standes der Technik um den Faktor 10 erhöhen lassen. Dadurch, daß das Wirbelbett bis in den Konus hineinragt, wird der Übergang zwischen dem Konus und dem zylindrischen Teil des Reaktors ständig von Partikeln umspült, so daß sich insbesondere an dieser sensiblen Stelle keine Ablagerungen bilden.

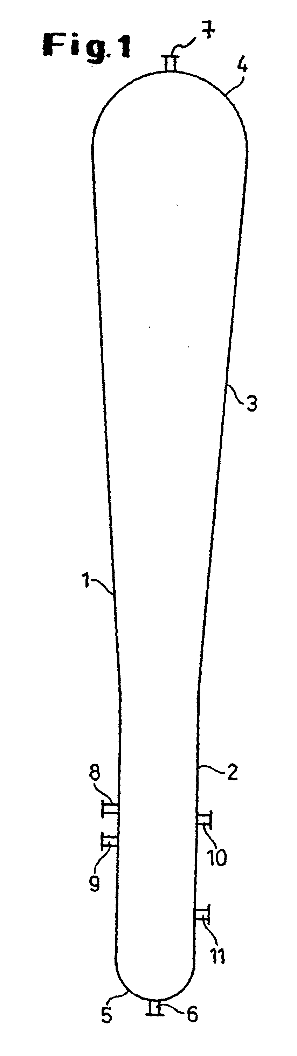

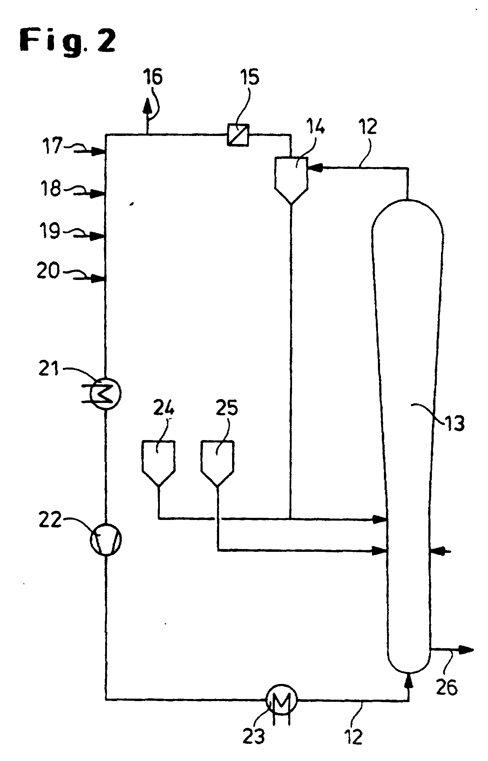

Im folgenden wird die Erfindung anhand der Figuren 1 und 2 beispielhaft erläutert.

Fig. 1 zeigt eine Prinzipskizze des erfindungsgemäßen Wirbelbettreaktors

Fig. 2 zeigt die Einbindung des erfindungsgemäßen Wirbelbettreaktors in das Polymerisationsverfahren.

In Figur 1 ist der erfindungsgemäße Reaktor dargestellt. Der Mantel 1 des vertikalen Reaktors besteht aus einem Zylinder 2 und einem sich kontinuierlich öffnenden Konus 3. Der Durchmesser des Zylinders beträgt 0,9 m und die Höhe 3,1 m. Der Konus 3 sitzt auf dem Zylinder 2 hat eine Höhe von 6,5 m. Dementsprechend ist das Verhältnis vom Durchmesser des Zylinders 2 zur Reaktorhöhe 10,6. Das Höhenverhältnis von dem Zylinders zu dem Konus beträgt 1:2,1. Auf den Konus aufgesetzt ist eine Halbkugel 4, die den Reaktor am Kopf abschließt. Den Boden des Reaktors bildet ebenfalls eine Halbkugel 5.

Ferner verfügt der Reaktor über einen Gasverteilungsboden (nicht dargestellt).

Der Reaktor weist am Boden 5 einen Flansch 6 als Gaseinlaß und in der Halbkugel 4 einen Flansch 7 als Gasauslaß auf. Durch die Flansche 8-10 werden Füllstoffe und ein oder mehrere Katalysatoren in geträgerter oder ungeträgerter Form und weitere Zusatzstoffe ebenfalls in geträgerter oder ungeträgerter Form in den erfindungsgemäßen Wirbelbettreaktor gefahren. Das polymerisierte Produkt wird über den Flansch 11 ausgeschleust

In Figur 2 ist die Einbindung des erfindungsgemäßen Wirbelbettreaktors in das Polymerisationsverfahren dargestellt. Ein Kreisgasgemisch 12 bestehend aus 1,3 Butadien, gegebenenfalls Additiven und Stickstoff als Inertgas wird von unten in den erfindungsgemäßen Wirbelbettreaktor 13 eingeleitet, in dem das 1,3 Butadien zu Polybutadien polymerisiert. Die Polymerisation findet bei einer Temperatur von 80°C und einem Druck von 4 bar statt.

Das an 1,3 Butadien abgereicherte Kreisgasgemisch 12 verläßt den Wirbelbettreaktor über Kopf und wird in einem Filter 15 von Partikeln, die aus dem Reaktor mitgerissen wurden, befreit. Über den Auslaß 16 kann ein Teil des Kreisgasgemisches 12 als Abluft abgelassen werden, bevor dem Kreisgasgemisch über die Einläße 17-20 Monomeres, Regler, Stickstoff und weitere Zusätze zugegeben werden. Das Kreisgasgemisch wird dann mittels eines Wärmetauschers 21 gekühlt, mit dem Verdichter 22 auf Prozeßdruck verdichtet und noch einmal mit dem Wärmetauscher 23 abgekühlt, bevor es wieder in den erfindungsgemäßen Wirbelbettreaktor geleitet wird.

Aus den Vorratsbehältern 24 und 25 werden Füllstoffe bzw. der oder die Katalysator/en in den Wirbelbettreaktor dosiert. Das fertige Produkt wird über den Auslaß 26 abgezogen.

### Beispiele

Die folgenden Beispiele dienen zur Verdeutlichung der Erfindung.

### Vorbemerkung:

Die unterschiedlichen Reaktoren wurden gemäß Fig. 2 in das Polymerisationsverfahren eingebunden. Als Gasverteiler wurde ein Lochboden analog EP-A-260 154 eingesetzt.

Für die EPM-Versuche wurde als Katalysator ein auf Silica geträgertes Ziegler-System auf Basis Vanadium (VOCl₃) mit Triethylaluminium als Co-Katalysator verwendet. Die durchschnittliche Korngröße des Trägers betrug 150-200 µm, als Reaktivator wurde Chloroform verwendet.

Für die BR-Versuche wurde als Katalysator der in EP-B-647 657 beschriebene Katalysator auf Neodym-Basis mit Diisobutylaluminiumhydrid verwendet. Die durchschnittliche Korngröße des Trägers betrug 150-200 µm.

Nach dem Schließen des Reaktors wurde die Anlage durch mehrmaliges Spülen mit Stickstoff inertisiert. Dann wurde ein inertes Startbett eingeschleust und Co-Katalysator zudosiert, bis der Sauerstoff- und Wassergehalt in der Anlage unter 3 ppm fiel.

### Versuch 1

Ein herkömmlicher Reaktor gemäß EP-A-301 872 wurde eingesetzt. An den Gasverteiler schloß sich ein vertikaler Zylinder mit Durchmesser 169 mm und Länge 1 m an, an den sich wiederum eine herkömmliche Verlangsamungszone mit Höhe 43 cm und einem Öffnungswinkel von 12° anschloß. Die Wirbelbetthöhe wurde konstant auf 60 cm oberhalb des Gasverteilers durch kontinuierliche Produktentnahme geregelt, die Leerrohrgeschwindigkeit im Zylinder wurde auf 0,6 m/s eingeregelt. Mit Hilfe des beschriebenen V-Katalysators wurde eine Produktionsrate von 2 kg Produkt (EPM) pro Stunde eingestellt, Abweichungen wurden durch Erhöhung oder Verminderung der Katalysatordosierung ausgeglichen. Die Reaktionstemperatur betrug 70°C. Die Zusammensetzung des Produktes wurde durch die Monomer-Zusammensetzung in der Gasphase eingestellt auf 70:30 Ethylen zu Propylen-Verhältnis, die Partialdrucke waren 7 bara Ethylen, 3 bara Propylen, 3 bara Stickstoff. Der Reaktor wurde nach 10 h abgeschaltet, es fanden sich fell-artige Ablagerungen an den Wänden und am Übergang von Zylinder zu Verlangsamungszone.

### Versuch 2

Es wurde analog zu Versuch 1 gearbeitet. Allerdings wurde diesmal ein Katalysator gemäß EP-B-647 657 auf Basis Nd verwendet. Die Reaktionstemperatur betrug wiederum 70°C, als Monomer wurde 1,3-Butadien gasförmig dosiert, der Partialdruck an Monomer betrug 4 bara, der Partialdruck an Stickstoff betrug 3 bara. Wiederum wurde eine Produktionsrate von 2 kg BR/k durch die Katalysatormenge eingestellt.

Der Reaktor wurde nach 5 h abgeschaltet, es fanden sich dicke fell-artige Ablagerungen an den Wänden, insbesondere am Übergang Zylinder-Verlangsammungszone.

### Versuch 3

Ein erfindungsgemäßer Reaktor wurde eingesetzt. An den Gasverteiler schloß sich ein vertikaler Zylinder mit einem Durchmesser von 219,5 mm und Länge 40 cm an, an den sich eine kelchartige Verlangsammungszone mit Anfangsdurchmesser 217,5 mm und einem Erweiterungswinkel von 4° und einer Höhe von 1,14 m anschloß. Der Reaktor wurde oben und unten durch eine Halbkugel abgeschlossen. Die Wirbelbetthöhe wurde konstant auf 60 cm oberhalb des Gasverteilers durch kontinuierliche Produktentnahme geregelt. Die Leerrohrgeschwindigkeit im zylindrischen Teil wurde auf 0,6 m/s eingeregelt. Mit Hilfe des beschriebenen V-Katalysators wurde eine Produktionsrate von 2 kg Produkt (EPM) pro Stunde eingestellt, Abweichungen wurden durch Erhöhung oder Erniedrigung der zudosierten Katalysatormenge ausgeglichen. Die Reaktionstemperatur betrug 70°C. Die Zusammensetzung des Produkte wurde durch die Monomerzusammensetzung in der Gasphase eingestellt auf 70:30 Ethylen zu Propylenverhältnis, die Partialdrücke waren analog Beispiel 1. Der Reaktor wurde nach 10 h abgestellt, es fanden sich keine Beläge an den Wänden oder am Übergang Zylinder zu Verlangsammungszone.

### Versuch 4

Es wurde analog zu Versuch 3 gearbeitet. Allerdings wurde diesmal ein Katalysator auf Basis Nd gemäß EP-B-647 657 verwendet. Die Reaktionstemperatur betrug wiederum 70°C, als Monomer wurde diesmal 1,3-Butadien gasförmig dosiert, die Partialdrucke an Monomer und Stickstoff waren analog Beispiel 2. Wiederum wurde eine Produktionsrate von 2 kg BR/Stunde durch die zugegebene Katalysatormenge eingestellt.

Der Reaktor wurde nach 5 h abgestellt, es fanden sich keine Beläge oder Ablagerungen an den Wänden oder am Übergang Zylinder-Verlangsammungszone.

## Patentansprüche

1. Wirbelbettreaktor mit einem kreisrunden Querschnitt zur Herstellung von klebrigen Polymerisaten in der Gasphase, **dadurch gekennzeichnet, dass** die Wandung (1) des Wirbelbettreaktors im unteren Teil als Zylinder (2) und daran anschließend als sich kontinuierlich öffnender Konus (3) geformt ist, und wobei der Winkel des Konus (3), bezogen auf die Mittelachse im Bereich von 3,5-5,5° beträgt, mit der Massgabe dass Reaktoren bei denen der Winkel des Konus (3), bezogen auf die Mittelachse 5-5,5° beträgt ausgenommen sind.

2. Wirbelbettreaktor nach Anspruch 1, **dadurch gekennzeichnet, daß** das Höhenverhältnis von Zylinder (2) zu Konus (3) 1:1,5 - 4, bevorzugt 1:1,8 - 2,4 beträgt.

3. Wirbelbettreaktor nach einem der Ansprüche 1 oder 2, **dadurch gekennzeichnet, daß** das Verhältnis von Durchmesser des Zylinders zu Gesamthöhe des Reaktors 1:8 - 15, vorzugsweise 1:10 - 12 beträgt.

4. Wirbelbettreaktor nach einem der Ansprüche 1 bis 3, **dadurch gekennzeichnet, daß** der Kopf (5) als Halbkugel geformt ist.

5. Wirbelbettreaktor nach einem der Ansprüche 1 bis 4, **dadurch gekennzeichnet, daß** der Reaktor mit einem Lochboden als Anströmboden versehen ist.

6. Verfahren zur Durchführung von Gasphasenpolymerisationsreaktionen in einem Wirbelbettreaktor, **dadurch gekennzeichnet, daß** ein Reaktor gemäß einem der Ansprüche 1 bis 5 eingesetzt wird.

7. Verfahren nach Anspruch 6, **dadurch gekennzeichnet, daß** die Höhe des Konus (3) so eingestellt wird, daß die Gasgeschwindigkeit am oberen Ende des Konus geringer als die Sinkgeschwindigkeit der wachsenden Katalysatorpartikel ist.

8. Verfahren nach einem der Ansprüche 6 oder 7, **dadurch gekennzeichnet, daß** das Wirbelbett höher als der Zylinder (2) ist.

9. Verfahren nach einem der Ansprüche 6 bis 8, **dadurch gekennzeichnet, daß** das Verhältnis von Durchmesser zur Höhe des Zylinders (2) so eingestellt wird, daß der Durchmesser größer als 70 % des maximalen Blasendurchmessers im Bett ist.

10. Verfahren nach einem der Ansprüche 6 bis 9, **dadurch gekennzeichnet, daß** die Gasleerrohrgeschwindigkeit in dem zylindrischen Teil 0,3 bis 2 m/s, vorzugsweise 0,4 bis 1 m/s beträgt.

11. Verfahren nach einem der Ansprüche 6 bis 10, **dadurch gekennzeichnet, daß** in Gegenwart eines inerten Füllstoffes polymerisiert wird.

12. Verfahren nach Anspruch 11, **dadurch gekennzeichnet, daß** der inerte Füllstoff Ruß, Silica, Ton, Talkum und/oder gemahlenes Polyolefin ist.

13. Verfahren nach einem der Ansprüche 6 bis 12, **dadurch gekennzeichnet, daß** bei Temperaturen unterhalb des Taupunktes eines der eingesetzten Kreisgasbestandteilen polymerisiert wird.

## Claims

1. Fluidised-bed reactor having a circular cross-section for the production of tacky polymers in the gas phase, **characterised in that** the wall (1) of the fluidised-bed reactor is in the form of a cylinder (2) in its lower portion and, adjacent thereto, is in the form of a continuously opening cone (3), the angle of the cone (3), relative to the centre line, being in the range from 3.5 to 5.5°, with the proviso that reactors in which the angle of the cone (3), relative to the centre line, is from 5 to 5.5° are excluded.

2. Fluidised-bed reactor according to claim 1, **characterised in that** the ratio of the height of the cylinder (2) to the height of the cone (3) is 1:1.5-4, preferably 1:1.8-2.4.

3. Fluidised-bed reactor according to either claim 1 or 2, **characterised in that** the ratio of the diameter of the cylinder to the overall height of the reactor is 1:8-15, preferably 1:10-12.

4. Fluidised-bed reactor according to any one of claims 1 to 3, **characterised in that** the top (5) is in the form of a hemisphere.

5. Fluidised-bed reactor according to any one of claims 1 to 4, **characterised in that** the reactor is provided with a perforated base as the initial-flow base.

6. Method of carrying out gas-phase polymerisation reactions in a fluidised-bed reactor, **characterised in that** a reactor according to any one of claims 1 to 5 is used.

7. Method according to claim 6, **characterised in that** the height of the cone (3) is such that the velocity of the gas at the upper end of the cone is lower than the rate of fall of the growing catalyst particle.

8. Method according to either claim 6 or 7, **characterised in that** the fluidised bed is higher than the cylinder (2).

9. Method according to any one of claims 6 to 8, **characterised in that** the ratio of the diameter of the cylinder (2) to its height is so adjusted that the diameter is greater than 70 % of the maximum bubble diameter in the bed.

10. Method according to any one of claims 6 to 9, **characterised in that** the nominal linear velocity of the gas in the cylindrical portion is from 0.3 to 2 m/s, preferably from 0.4 to 1 m/s.

11. Method according to any one of claims 6 to 10, **characterised in that** the polymerisation is carried out in the presence of an inert filler.

12. Method according to claim 11, **characterised in that** the inert filler is carbon black, silica, clay, talcum and/or ground polyolefin.

13. Method according to any one of claims 6 to 12, **characterised in that** the polymerisation is carried out at temperatures below the dew point of one of the circulating gas constituents employed.

## Revendications

1. Réacteur à lit fluidisé de section circulaire pour la fabrication de polymères collants dans la phase gazeuse, **caractérisé en ce que** la paroi (1) du réacteur à lit fluidisé a la forme d'un cylindre (2) dans la partie inférieure et ensuite d'un cône (3) s'ouvrant en continu, l'angle du cône (3), rapporté à l'axe médian, se situant dans la plage de 3,5-5,5°, avec la condition que les réacteurs pour lesquels l'angle du cône (3), rapporté à l'axe médian, est de 5-5,5°, sont exclus.

2. Réacteur à lit fluidisé suivant la revendication 1, **caractérisé en ce que** le rapport des hauteurs du cylindre (2) sur le cône (3) est de 1:1,5-4, de manière préférée de 1:2-2,4.

3. Réacteur à lit fluidisé suivant l'une des revendications 1 ou 2, **caractérisé en ce que** le rapport du diamètre du cylindre sur la hauteur totale du réacteur est de 1:8 - 15, de préférence de 1:10 - 12.

4. Réacteur à lit fluidisé suivant l'une des revendications 1 à 3, **caractérisé en ce que** la tête (5) a la forme d'une demi-sphère.

5. Réacteur à lit fluidisé suivant l'une des revendications 1 à 4, **caractérisé en ce que** le réacteur est équipé d'un plateau perforé comme plateau d'alimentation.

6. Procédé de réalisation de réactions de polymérisation en phase gazeuse dans un réacteur à lit fluidisé, **caractérisé en ce qu'**on utilise un réacteur suivant l'une des revendications 1 à 5.

7. Procédé suivant la revendication 6, **caractérisé en ce que** la hauteur du cône (3) est réglée de telle façon que la vitesse du gaz à l'extrémité supérieure du cône est inférieure à la vitesse de sédimentation des particules de catalyseur en cours de croissance.

8. Procédé suivant l'une des revendications 6 ou 7, **caractérisé en ce que** le lit fluidisé est plus haut que le cylindre (2).

9. Procédé suivant l'une des revendications 6 à 8, **caractérisé en ce que** le rapport du diamètre sur la hauteur du cylindre (2) est réglé de telle façon que le diamètre est supérieur à 70 % du diamètre maximum des bulles dans le lit.

10. Procédé suivant l'une des revendications 6 à 9, **caractérisé en ce que** la vitesse du gaz rapportée au tube vide dans la partie cylindrique est de 0,3 à 2 m/s, de préférence de 0,4 à 1 m/s.

11. Procédé suivant l'une des revendications 6 à 10, **caractérisé en ce qu'**on polymérise en présence d'une matière de charge inerte.

12. Procédé suivant la revendication 11, **caractérisé en ce que** la matière de charge inerte est la suie, la silice, l'argile, le talc et/ou une polyoléfine moulue.

13. Procédé suivant l'une des revendications 6 à 12, **caractérisé en ce qu'**on polymérise à des températures inférieures au point de rosée d'un des composants du gaz de circulation utilisé.
